# EUROPÄISCHE PATENTSCHRIFT

(11) **EP 1 101 934 B1**
(45) Veröffentlichungstag und Bekanntmachung des Hinweises auf die Patenterteilung: **12.01.2005**
(21) Anmeldenummer: 00125085.1
(22) Anmeldetag: 17.11.2000
(51) Int. Cl.: F03D 1/06, F03D 11/04

(54) **Windkraftanlage mit bewegbarem Bordkran**
Wind turbine having a movable crane in the nacelle
Eolienne avec grue de bord mobile

(30) Priorität: 18.11.1999 DE 19955516
(43) Veröffentlichungstag der Anmeldung: 23.05.2001
(73) Patentinhaber: GENERAL ELECTRIC COMPANY, Schenectady, NY 12345 (US)
(72) Erfinder: Weitkamp, Roland, Dipl.-Ing., 49191 Belm (DE)
(74) Vertreter: Hilleringmann, Jochen, Dipl.-Ing.

(56) Entgegenhaltungen:
- EP-A- 1 101 936
- WO-A-96/10130
- WO-A-97/21621
- US-A- 4 311 434
- "CUTAWAY MODEL AN BONUS 2MW" AN WINDENERGIE GMBH WEBSITE, [Online] XP002182869 Gefunden im Internet: <URL:http://www.anwind.de/2MWae.htm> [gefunden am 2001-11-13] & "REFERENCES 2MW" AN WINDENERGIE GMBH WEBSITE, [Online] Gefunden im Internet: <URL:http://www.anwind.de/2%20MWe.htm> [gefunden am 2001-11-13]

## Beschreibung

Die Erfindung betrifft eine Windkraftanlage sowie ein Verfahren zum Austausch der Hauptkomponenten des Maschinengehäuses einer Windkraftanlage mittels bordeigenen Mitteln.

Für die Montage einer Windkraftanlage sind entweder sehr große Krane erforderlich, um das Maschinengehäuse (auch Gondel genannt) als Ganzes zu heben (Gewichte bis zu 100 t bei heutigen Gondeln), oder die Hauptkomponenten des Maschinengehäuses werden einzeln auf den Turm gehoben. Bei den Hauptkomponenten handelt es sich in erster Linie um den Rotor, bestehend aus Rotornabe mit mindestens einem Rotorblatt, die Hauptwelle mit Wellenlagerung, den Generator und das zwischen Welle und Generator geschaltete Getriebe. Diese Hauptkomponenten bilden den Triebstrang der Windkraftanlage. Wie bei der Montage, so ist auch beim Austausch einer dieser Hauptkomponenten sowie für die Montage und den Austausch des Rotors ein Kran erforderlich.

Dieses Problem verschärft sich in dem Augenblick, in dem das Gewicht der Gondel an die Grenzen der Krankapazität kommt bzw. diese überschreitet oder Windkraftanlagen in weniger stark industrialisierten Ländern, in denen beispielsweise mobile Krane nicht so ohne weiteres zur Verfügung stehen, betrieben werden. Hier bietet es sich an, die Windkraftanlage mit einem bordeigenen Kransystem zu versehen, wie es in der AT-PS 401674 beschrieben ist. Dabei ist jedoch zu beachten, dass diese Bordkransysteme für die derzeit weit verbreiteten WKA-Konzepte ungeeignet sind oder sehr stabil und damit schwergewichtig ausgebildet sein müssen, um die einzelnen Komponenten bei aus dem Gehäuse auskragendem Kran ablassen und anheben zu können.

In DE 196 47 515 A1 und DE 197 41 988 A1 werden Verfahren zum Aufbau einer Windkraftanlage beschrieben, bei denen zum Aufbau des Turms durch Aufeinandersetzen einzelner Turmsegmente ein längs dieser hochfahrbarer Kran verwendet wird, der schließlich auch das Maschinengehäuse und dessen Hauptkomponenten zur Turmspitze befördert. Aus DE 28 23 525 A1 ist schließlich bekannt, das Maschinengehäuse mittels Seile, die ausgehend von einer am Boden des Turms angeordneten Winde über Umlenkrollen am oberen Ende des Turms zurück nach unten geführt sind, anzuheben.

Es ist bereits auf der Fachmesse "Substain '99 - The World Sustainable Energy Fair" (25. bis 27. Mai 1999) von der Anmelderin Windenergie erstmals der Öffentlichkeit ein Konzept vorgestellt worden, bei dem der Generator mittels eines bordeigenen lediglich vertikal nach oben aus der Gondel ausfahrbaren Kransystems durch eine Offnung in der Bodenwand des Maschinengehäuses aus diesem heraus abgelassen bzw. in dieses hineinbefördert wird. Bei diesem Konzept besteht allerdings noch das Problem, dass im Falle eines Getriebeschadens das Getriebe weiterhin mittels eines externen Krans nach oben aus dem Maschinengehäuses herausgehoben bzw. von oben in das Maschinengehäuse hinein abgesenkt werden muss.

In EP-A-1 101 936, bei der es sich um ein Dokument nach Artikel 54 (3) EPÜ handelt, ist eine Windkraftanlage beschrieben, deren Gondel einen Maschinenrahmen aufweist, welcher an seinem unteren Ende außerhalb des Turms offen ausgebildet ist. Oben auf dem Maschinenrahmen ist nach Art eines Portalkrans eine längs verschiebbare Winde angeordnet, mit der sich die Hauptkomponenten des Maschinengehäuses, wie beispielsweise Generator und Getriebe, durch das untere Ende des Maschinenrahmens hindurch bewegen lassen.

Ferner ist aus WO-A-96/10130 eine Windkraftanlage mit einer Lasthebevorrichtung im. Maschinengehäuse bekannt. Die Lasthebevorrichtung ist als Schwenkkran ausgeführt und weist zwei Arme auf, die um eine horizontale Achse schwenkbar gelagert sind. Die Hauptkomponenten des Maschinengehäuses, wie beispielsweise der Generator, lassen sich mit der Lasthebevorrichtung in das Maschinengehäuse bzw. aus diesem verbringen. Diese Komponenten müssen seitlich am Maschinengehäuse vorbeibewegt werden, um in das Maschinengehäuse hinein bzw. aus diesem heraus verbracht zu werden. Darüber hinaus weist diese bekannte Windkraftanlage im Boden des Maschinengehäuses ein mit dem Turm fluchtendes Loch auf, über das sich Kleinteile mit Hilfe eines Krans mit um eine vertikale Achse schwenkbarem Arm transportieren lassen.

Der Erfindung liegt die Aufgabe zugrunde, eine Windkraftanlage zu schaffen, die unter Beibehaltung eines bewährten Maschinenkonzeptes derart konstruiert ist, dass die einzelnen Bordkomponenten des Maschinengehäuses auf einfachere Weise mittels eines bordeigenen Kransystems getauscht bzw. montiert werden können.

Zur Lösung dieser Aufgabe wird mit der Erfindung eine Windkraftanlage nach Anspruch 1 vorgeschlagen.

Wie bei einer Windkraftanlage üblich, befinden sich in bzw. an einem auf einem Turm angeordneten Maschinengehäuse eine Welle mit mindestens einem Wellenlager, ein Getriebe, ein Generator und ein Rotor. Diese Komponenten (nachfolgend auch als Hauptkomponenten bezeichnet) bilden den Triebstrang der Windkraftanlage und sind entlang einer Achse des Maschinengehäuses nebeneinanderliegend und untereinander mechanisch verbunden angeordnet. Während die Welle aus der einen Seite des Maschinengehäuses herausragt, befindet sich das Getriebe innerhalb des Maschinengehäuses im wesentlichen in Verlängerung des Turms, während der Generator in einem radial vom Turm abstehenden Teil des Maschinengehäuses untergebracht ist. An der Welle ist der Rotor mit einer Nabe befestigt, von der mindestens ein Rotorblatt radial absteht. Unterhalb des Generators befindet sich in der Bodenwand des Maschinengehäuses eine Öffnung. Ferner befindet sich in dem Maschinengehäuse der efindungsgemäßen Windkraftanlage ein Bordkransystem, das erfindungsgemäß als schwenkbares Portalkransystem ausgebildet ist.

Erfindungsgemäß ist die Öffnung in der Bodenwand des Maschinengehäuses derart bemessen, dass man durch diese Öffnung sowohl den Generator als auch bei nicht vorhandenem Generator, also bei noch nicht montiertem oder bereits demontiertem oder von der Öffnung weggeschobenem Generator, das Getriebe hindurchtransportieren kann. Zu diesem Zweck lässt sich der Bordkran derart manövrieren, dass sich gegebenenfalls nach dem Ablassen oder Verschieben des Generators das Getriebe innerhalb des Gehäuses bis über die Bodenwandöffnung bewegen und alsdann durch die Bodenwandöffnung ablassen lässt. Der umgekehrte Vorgang findet dann beim Einbau des Getriebes statt.

Mit der Erfindung wird also vorgeschlagen, die Öffnung in der Bodenwand des Maschinengehäuses für das Getriebe bzw. nicht nur für die Montage, den Einbau und den Ausbau des Generators, sondern auch für das Getriebe zu nutzen.

Um das Volumen des Maschinengehäuses trotz Unterbringung eines bordeigenen Kransystems relativ klein zu halten, ist gemäß einer vorteilhaften Weiterbildung der Erfindung vorgesehen, in der Oberseite des Maschinengehäuses eine Öffnung vorzusehen, die mit einer oder mehreren Klappen verschlossen und geöffnet werden kann. Noch vorteilhafter ist es, wenn mittels entsprechender Klappen- bzw. Deckelkonstruktionen sich die gesamte obere Maschinengehäusehälfte aufklappen lässt. Der Bordkran kann dann aus einer Parkposition, in der er abgeklappt oder auf andere Weise eine nur geringe Bauhöhe aufweist, in eine Arbeitsposition aufgerichtet werden, in der er oben aus dem Maschinengehäuse durch die Öffnung herausragt. Ein seitliches Herauskragen des Bordkrans zur Seite und/oder nach hinten aus dem Maschinengehäuse ist jedoch nach der Erfindung nicht vorgesehen, da der Generator und das Getriebe über die Bodenwandöffnung aus dem Maschinengehäuse abgelassen bzw. bis in dieses angehoben werden.

Das Maschinengehäuse der erfindungsgemäßen Windkraftanlage ist ferner mit einer vorzugsweise neben dem Generator angeordneten Kranluke versehen, durch das hindurch das Gestell des Krans oder zumindest das Seil bis außerhalb des Maschinengehäuses bewegbar ist. Hierdurch lassen sich sämtliche Nebenaggregate des Maschinengehäuses, wie beispielsweise Kühler, Ölpumpen, Azimutantriebe usw., nach unten ablassen bzw. nach oben anheben. Um zu vermeiden, dass Komponenten beim Ablassen durch Windturbulenzen an den Turm schlagen, werden diese Komponenten zweckmäßigerweise durch geeignete Vorrichtungen, wie beispielsweise ein gespanntes Stahlseil oder eine außen an der Turmwand montierte Führungsschiene geführt.

Der Antrieb des Zugorgans, bei dem es sich insbesondere um ein Seil handelt, kann in dem Maschinengehäuse untergebracht sein. Um hierfür im Maschinengehäuse jedoch keinen Platz zur Verfügung stellen zu müssen, ist es zweckmäßig, eine Seilwinde oder dergleichen Lastzugorganantrieb am Fundament bzw. am unteren Ende des Turms anzuordnen, um dann das Seil durch den Turm bzw. außen am Turm vorbei bis oben in das Maschinengehäuse zu führen. Die Winde wird dann für die Dauer der Montagetätigkeit montiert (Kostenersparnis).

Durch den über die gesamte Länge des Gehäuses (betrachtet in axialer Richtung des Triebstrangs) verschwenkbare Bordkran der erfindungsgemäßen Windkraftanlage ist es darüber hinaus möglich, mit diesem Bordkran auch die Welle und das Hauptwellenlager abzulassen bzw. in das Maschinengehäuse zu heben. Beides kann sowohl über die Bodenwandöffnung als auch über die Vorderseite des Maschinengehäuses (dort, wo der Rotor angeordnet ist) erfolgen. Der zuletzt genannte Fall macht es erforderlich, dass der Bordkran derart verfahrbar bzw. verschwenkbar ist, dass er über die Vorderseite des Gehäuses auskragt. Dies hat darüber hinaus den Vorteil, dass der Bordkran nun auch für die Montage und den Austausch des Rotors verwende werden kann. Die Montage des Rotors kann nämlich nun so erfolgen, dass zunächst die Nabe angehoben und an der Welle befestigt wird, um danach das mindestens eine Rotorblatt oder sämtliche Rotorblätter einzeln anzuheben und an der Nabe zu befestigen. Die gleichen Verfahrensschritte erfolgen in umgekehrter Reihenfolge bei der Abnahme des Rotors. Sofern kein Rotor an der Welle angebracht ist, lässt sich diese bei über die Vorderseite auskragbarem Kransystem ggf. nach vorheriger Entfernung des Hauptlagers oder mit diesem zusammen ablassen und anheben.

Weiterhin ist es zweckmäßig, den Kran bei montiertem Rotor zum Anheben bzw. Ablassen der Einbauten der Nabe (beispielsweise Rotorblattverstellsystem) einzusetzen.

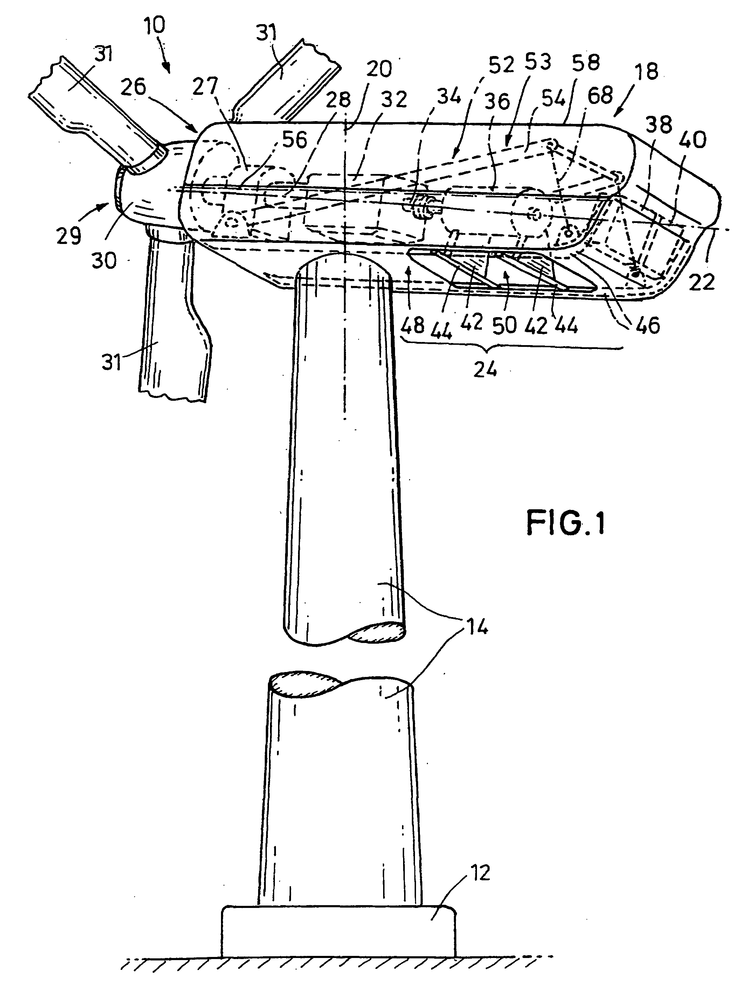

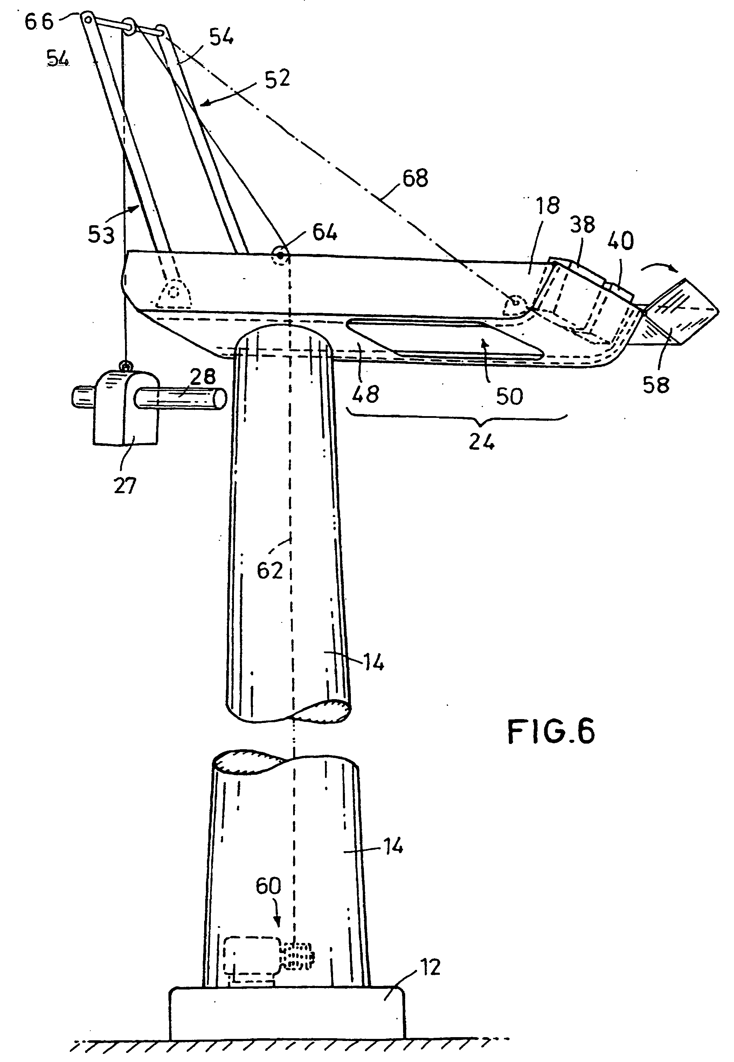

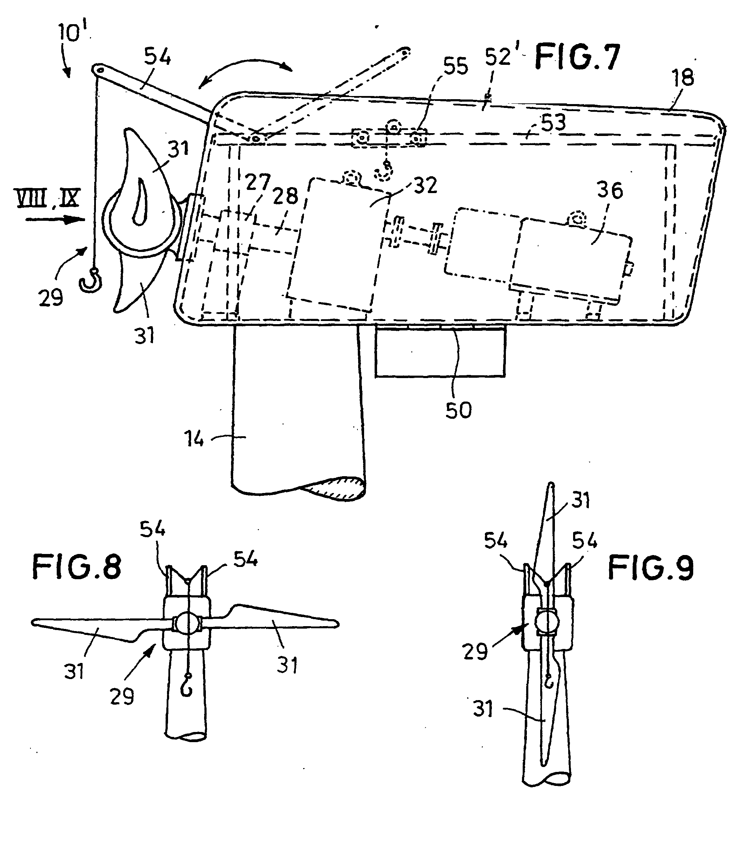

Nachfolgend wird anhand der Zeichnung ein Ausführungsbeispiel der Erfindung näher erläutert. Anhand der einzelnen Fign. 1 bis 6 werden dabei schematisch der Aufbau des Maschinengehäuses und die einzelnen Verfahrensschritte für den Austausch der Hauptkomponenten des Maschinengehäuses und des Rotors dargestellt. Dabei ist zu beachten, dass die einzelnen Verfahrensschritte in umgekehrter Reihenfolge bei der Montage und beim Einbau der Hauptkomponenten bzw. des Rotors ablaufen. Die Fign. 7 bis 9 zeigen weitere Alternativen von Windkraftanlagenkonstruktionen und der Montage sowie Demontage des Rotors.

In Fig. 1 ist der prinzipielle Aufbau einer Windkraftanlage 10 gemäß einem bevorzugten Ausführungsbeispiel schematisch dargestellt. Auf einem Fundament 12 befindet sich der Turm 14, an dessen oberem Ende ein Maschinengehäuse 18 um eine vertikale Drehachse 20 drehbar gelagert ist. Das Maschinengehäuse 18 weist eine quer zur Vertikalachse 20 gerichtete Längserstreckung 22 auf und steht mit seinem Gehäuseteil 24 radial vom Turm 14 ab. An dem vorderen Ende 26 des Maschinengehäuses 18 befindet sich in diesem das Hauptlager 27 für die Welle 28, an der der Rotor 29 befestigt ist. Der Rotor 29 weist eine Nabe 30 mit im Regelfall ein, zwei oder drei Rotorblättem 31 auf. Die Welle 28 ist mechanisch mit einem Getriebe 32 verbunden, das über eine schnelllaufende Welle 34 mit einem Generator 36 verbunden ist. Optional befinden sich in dem Maschinengehäuse 18 ein Transformator 38 sowie diverse Schaltschränke 40.

Der Generator 36 steht auf Füßen 42, unter denen zwei quer zur Längserstreckung 22 verlaufende Quertraversen 44 angeordnet sind. Die Quertraversen 44 sind von unten an zwei in Längserstreckung 22 verlaufenden und voneinander beabstandeten Längsträgern 46 des Maschinengehäuses 18 befestigt. Unterhalb der Quertraversen 44 und der Längsträger 46 befindet sich in der Bodenwand 48 des Maschinengehäuses 18 eine Bodenöffnung 50, die derart bemessen ist, dass der Generator 36 sich durch diese Öffnung hindurch in das Maschinengehäuse 18 hinein- bzw. aus dem Maschinengehäuse 18 herausbewegen lässt.

Alternativ zur Lagerung des Generators auf Querträgem kann dieser auch direkt an dem Getriebe 32 angeflanscht sein.

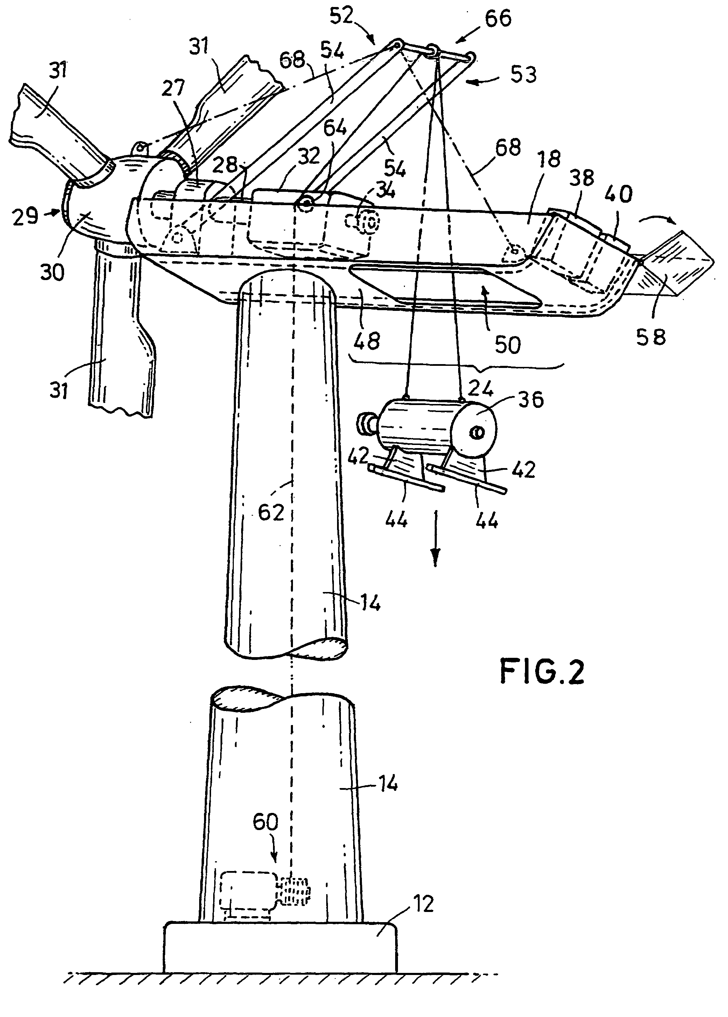

Die Beförderung des Generators 36 aus dem Maschinengehäuse 18 heraus bzw. in dieses hinein erfolgt mittels eines bordeigenen als Schwenkportalkran ausgebildeten Krans 52, der ein Gestell 53 mit zwei schwenkbaren Kranarmen 54 aufweist. In Fig. 1 ist der Bordkran 52 in seiner Parkposition dargestellt, in der er vollständig in dem Maschinengehäuse 18 untergebracht ist. Bei 56 sind in Fig. 1 Scharnierachsen für zwei Deckelklappen 58 des Maschinengehäuses dargestellt, die symmetrisch zur Längserstreckung 22 angeordnet sind. Durch Aufklappen dieser Deckelklappen 58 ist das Maschinengehäuse 18 nach oben hin geöffnet, so dass nun der Schwenkportalkran 52 aufgerichtet werden kann (s. Fig. 2). Unten am Fundament 12 des Turms 14 lässt sich eine Seilwinde 60 montieren, von der ein Seil 62 im Turm oder außen am Turm 14 vorbei bis in das Maschinengehäuse 18 und von dort über eine Umlenkrolle 64 bis zum oberen Ende 66 der Kranarme 54 verläuft. Zum Ablassen des Generators 36 wird der Schwenkportalkran 52 derart verschwenkt, dass die oberen Enden 66 seiner Arme 54 oberhalb des Generators 36 angeordnet sind. Nun kann der Generator 36 durch die Bodenöffnung 50 hindurch abgelassen bzw. angehoben werden.

Die Montage bzw. der Austausch des Getriebes 32 kann dann erfolgen, wenn sich der Generator 36 noch nicht im Maschinengehäuse 18 befindet oder wenn er zur Seite oder nach hinten von der Bodenöffnung 50 in eine Zwischenposition wegbewegt ist oder sich in seiner Betriebsposition außerhalb der Bodenöffnung befindet. Die Öffnung 50 in der Bodenwand 48 ist nämlich derart bemessen, dass das Getriebe 32, das im Regelfall größere Dimensionen quer zur Längserstreckung 22 des Gehäuses aufweist, ebenfalls durch diese Öffnung 50 hindurch transportiert werden kann. Der Transport des Getriebes 32 innerhalb des Maschinengehäuses 18 erfolgt dabei durch entsprechende Verschwenkung der Kranarme 54. Je nach Ausführung der Lagerung der Welle 28 (nämlich unter Einschluss des Getriebes als zweiter Lagerpunkt - sogenannte Dreipunktlagerung) kann es erforderlich sein, die Welle mittels einer Wellenniederhaltevorrichtung 70 zu fixieren, bevor das Getriebe 32 demontiert werden kann.

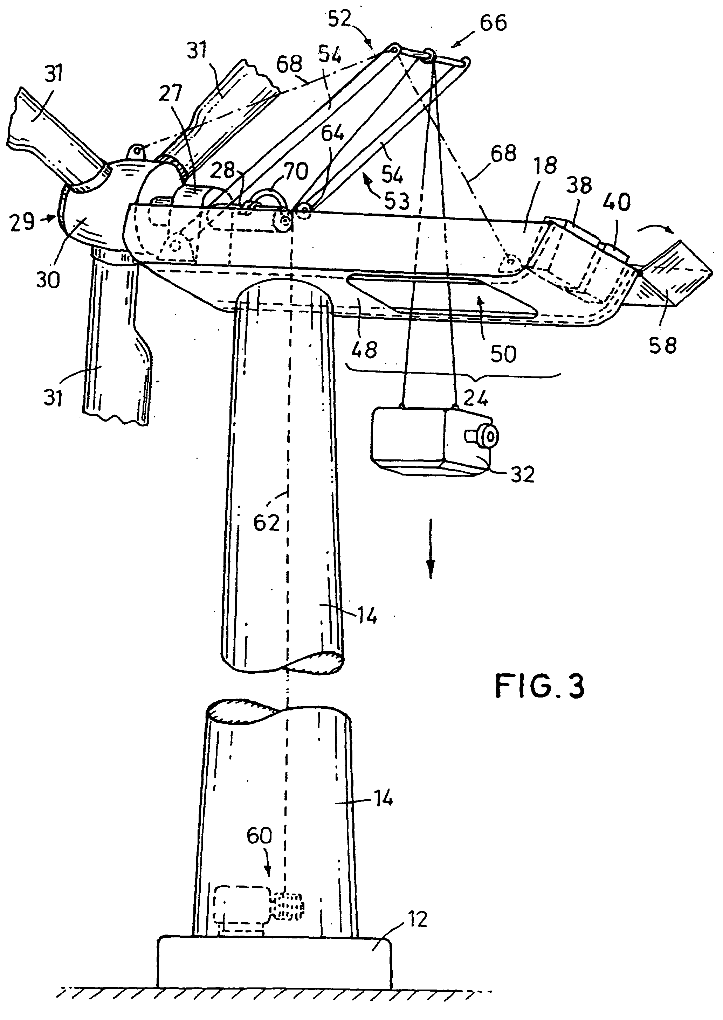

In den Fign. 2 und 3 sind Verzurrungen 68, z.B. handelsübliche Schwerlast-Kettenzüge, dargestellt, mit denen der Schwenkportalkran 52 einerseits am Maschinengehäuse 18 und andererseits an der Nabe 30 des Rotors 29 arretierbar ist. Der Schwenkportalkran 52 kann anstelle dieser Verzurrungen bzw. zusätzlich zu diesen Verzurrungen über Hydraulikstempel-/Zylinder-Einheiten verfügen, mit denen sich die Kranarme 54 verschwenken lassen.

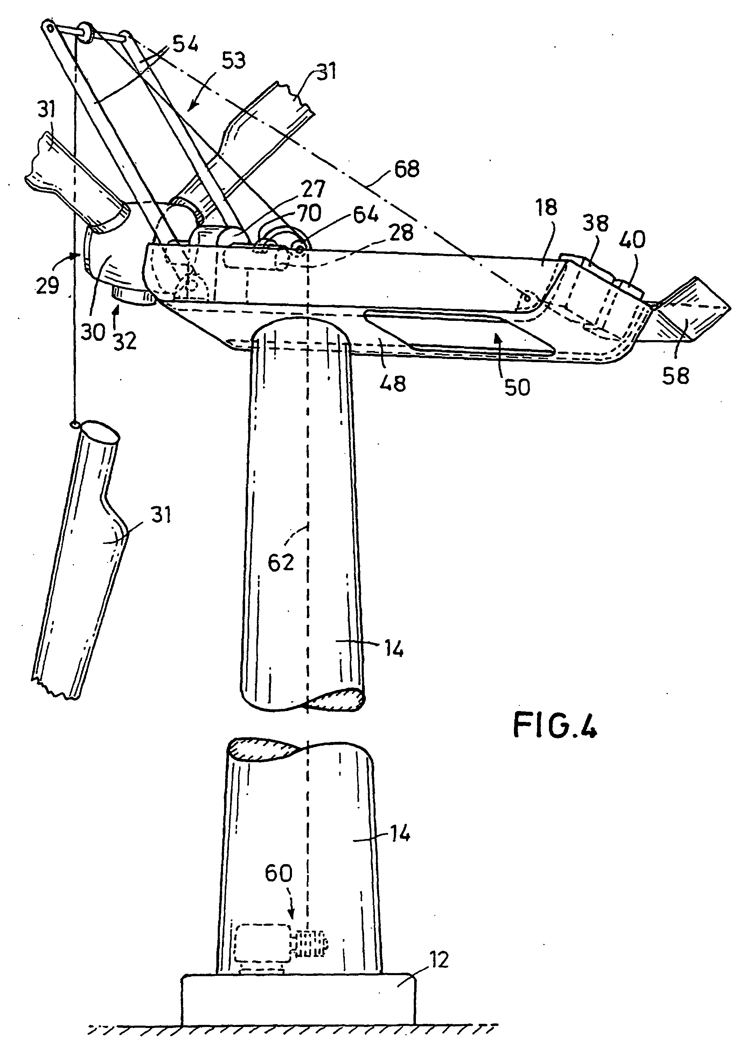

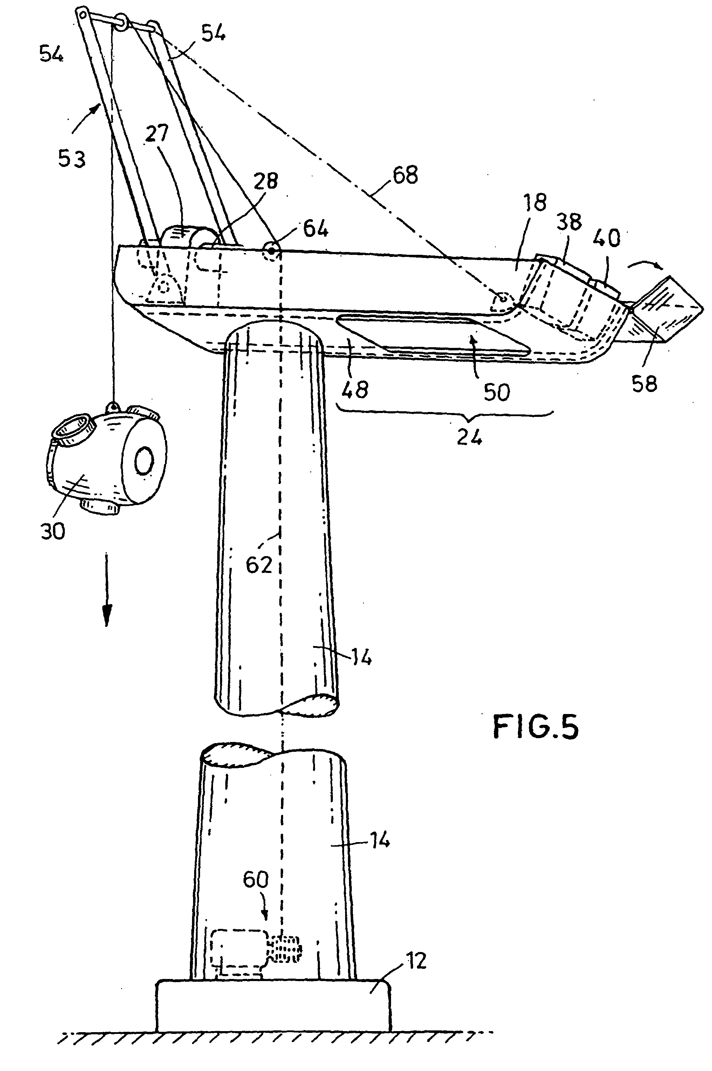

Durch Verschwenken der Kranarme 54 in Richtung des vorderen Endes 26 des Gehäuses 18, bis die Enden 66 der Kranarme 54 über den Rotor 29 vorstehen, lässt sich der Schwenkportalkran 52 auch zur Montage sowie Demontage des Rotors 29 einsetzen. In der Darstellung gemäß Fig. 4 wird zunächst jedes einzelne Rotorblatt 31 abgenommen, wobei man jeweils dasjenige Rotorblatt 31 montiert bzw. demontiert, das vertikal nach unten weisend an der Nabe 30 angebracht ist bzw. anzubringen ist. Nachdem auf diese Weise sämtliche Rotorblätter 31 abgenommen sind, lässt sich die Nabe 30 ablassen (s. Fig. 5). Nachdem dies erfolgt ist, kann nun das Hauptwellenlager 27 ggf. mit der Hauptwelle 28 mittels des Schwenkportalkrans 52 abgelassen werden. Damit wird also die letzte Hauptkomponente des Maschinengehäuses 18 ebenfalls mit Hilfe des Schwenkportalkrans 52 abgelassen bzw. angehoben.

Bei der erfindungsgemäßen Windkraftanlage 10 lassen sich also sämtliche in der Höhe befindlichen Komponenten durch bordeigene Mittel montieren bzw. demontieren. Dies stellt einen ganz entscheidenden Vorteil dar, wenn man die Windkraftanlage an Standorten aufbauen will, an denen externe Krane nicht so ohne weiteres verfügbar sind. Hier sei auch das Anwendungsgebiet der Offshore-Anlagen genannt, bei denen bisher mit Schiffskranen gearbeitet wird, die Bewegungen des Schiffsrumpfs ausgleichen müssen, um die Hauptkomponenten montieren bzw. demontieren zu können.

In Fig. 7 ist schematisch eine alternative Konstruktion einer Windkraftanlage 10' mit Zweiblattrotor gezeigt. Soweit die in Fig. 7 gezeigten Teile der Windkraftanlage 10' denjenigen der Windkraftanlage 10 der Fign. 1 bis 6 gleichen bzw. funktionsmäßig entsprechen, sind sie mit den gleichen Bezugszeichen versehen.

In Fig. 7 ist der Aufbau des Maschinengehäuses 18 so gewählt, dass die Bodenöffnung 50 entweder gar nicht oder lediglich teilweise von dem Generator 36 in dessen Betriebsposition überdeckt ist. Im erstgenannten Fall kann der Generator 36 in seiner Betriebsposition außerhalb der Bodenöffnung 50 verbleiben, wenn das Getriebe 32 ausgetauscht werden muss. Im zweitgenannten Fall ist es erforderlich, den Generator 36 aus seiner Betriebsposition, in der er teilweise die Bodenöffnung 50 überdeckt, in eine Zwischenposition innerhalb des Maschinengehäuses 18 zu verschieben, so dass dann die Bodenöffnung 50 freigelegt ist, um das Getriebe 32 auszutauschen.

Fig. 7 zeigt ein Maschinengehäuse 18 mit einem als Portalkran 52' ausgeführtem Kransystem, das eine auf dem Gestell 53 verfahrbare Laufkatze 55 aufweist. Um bei einem derartigen Portalkransystem auch noch vor dem Rotor 29 arbeiten zu können, weist das Gestell 53 zwei Schwenkarme 54 auf, die an dem Gestell 53 schwenkbar gelagert sind. Alternativ können die schwenkbaren Arme 54 auch als aus dem Gestell 53 teleskopierbare Schienen ausgebildet sein, auf denen dann die Laufkatze 55 bis über und vor dem Rotor 29 verfahrbar ist.

Je nach Gewicht und Größe des Rotors 29 lässt sich dieser entweder als Einheit in einer Horizontalstellung (s. Fig. 8) oder in Einzelteilen in einer Vertikalstellung (s. Fig. 9) montieren bzw. demontieren. Im letztgenannten Fall ist es erforderlich, dass der Portalkran 52' an seinem bis über und vor dem Rotor 29 verschwenkbaren vorderen Ende "gegabelt" ist, so dass die beiden Schwenkarme 54 beidseitig des hochstehenden Rotorblatts 31 angeordnet sind.

## Patentansprüche

1. Windkraftanlage mit
- einem Turm (14),
- einem an dem Turm (14) um eine Vertikalachse (20) drehbaren Maschienengehäuse (18) zur Aufnahme zumindest einer Welle (28) mit mindestens einem Wellenlager (27), eines Getriebes (32) und eines Generators (36), die untereinander mechanisch verbunden sind, wobei das Maschinengehäuse (18) einen radial vom Turm (14) abstehenden Gehäuseteil (24) aufweist,
- einem Rotor (29) mit einer mit der Welle (28) verbundenen Nabe (30) und mit mindestens einem von dieser abstehenden Rotorblatt (31), und
- einem im Maschinengehäuse (18) angeordneten Bordkran (52,52') mit einem Gestell (53) und einem Lastaufnahmeorgan (62), wobei der Bordkrans (52,52') als Schwenkportalkran mit um eine Horizontalachse verschwenkbaren Armen (54) ausgebildet ist,
**dadurch gekennzeichnet,**
- **dass** das Gestell (53) des Bordkrans (52,52') zum Anhängen sowohl des Generators (36) als auch des Getriebes (32) an dem Lastaufnahmeorgan (62) an dem Maschinengehäuse (18) verschwenkbar ist,
- **dass** in der Bodenwand (48) des radial vom Turm (14) abstehenden Maschinengehäuseteils (24) eine Öffnung (50) ausgebildet ist, und
- **dass** die Öffnung (50) in der Bodenwand (48) derart bemessen ist, dass durch sie hindurch mittels des Bordkrans (52,52') sowohl der Generator (36) als auch das Getriebe (32) hindurch bewegbar ist.

2. Windkraftanlage nach Anspruch 1, **dadurch gekennzeichnet, dass** der obere Teil des Maschinengehäuses (18) zumindest bereichsweise abnehmbar und/oder auf- bzw. abklappbar ist.

3. Windkraftanlage nach Anspruch 1 oder 2, **dadurch gekennzeichnet, dass** das Gestell (53) des Bordkrans (52,52') derart bewegbar in dem Maschinengehäuse (18) angeordnet ist, dass an das Lastaufnahmeorgan (62) sowohl das mindestens eine Wellenlager (27) als auch die Welle (28) anhängbar und bewegbar ist.

4. Windkraftanlage nach einem der Ansprüche 1 bis 3, **dadurch gekennzeichnet, dass** das Gestell (53) des Bordkrans (52,52') derart bewergbar in dem Maschinengehäuse (18) angeordnet ist, dass an das Lastaufnahmeorgan (62) sowohl ein Rotorblatt (31) als auch die Nabe (30) - mit oder ohne dem mindestens einen Rotorblatt (31) - anhängbar ist.

5. Windkraftanlage nach einem der Ansprüche 1 bis 4, **dadurch gekennzeichnet, dass** zum Anheben und Absenken des Lastaufnahmeorgans (62) eine Winde (60) vorgesehen ist, die am Fuß des Turms (14) anbringbar ist, und dass sich das Lastaufnahmeorgan (62) von der Winde (60) aus in oder an dem Turm (14) bis in das Maschinengehäuse (18) hinein erstreckt.

## Claims

1. Wind energy plant comprising
a tower (14),
an engine hosing (18) adapted to be rotated about a vertical axis (20) on the tower (14) and receiving at least one shaft (28) with at least one shaft bearing (27), a transmission (32) and a generator (36) that are mechanically interconnected, the engine housing (18) having a housing part (24) projecting radially from the tower (14),
a rotor (29) with a hub (30) connected to the shaft (28) and with at least one rotor blade (31) projecting therefrom, and
an on-board crane (52, 52') arranged in the engine housing (18) and having a frame (53) and a load receiving element (62), said on-board crane (52, 52') being designed as a swivelling portal crane with arms (54) pivotable about a horizontal axis,
**characterized in that**
the frame (53) of the on-board crane (52, 52') may be pivoted at the engine housing (18) to hang both the generator (36) and the transmission (32) to the load receiving element (62),
an opening (50) is formed in the bottom wall (48) of the engine housing part (24) projecting radially from the tower (14), and
the opening (50) in the bottom wall (48) is dimensioned such that both the generator (36) and the transmission (32) may moved therethrough using the on-board crane (52, 52').

2. Wind energy plant of claim 1, wherein the upper part of the engine housing (18) is at least partially removable and/or adapted to be tilted open or away.

3. Wind energy plant of claim 1 or 2, wherein the frame (53) of the on-board crane (52, 52') is arranged to be movable in the engine housing (18) such that both the at least one shaft bearing (27) and the shaft (28) may be hung to the load receiving element (62).

4. Wind energy plant of one of claims 1 to 3, wherein the frame (53) of the on-board crane (52, 52') is arranged to be movable in the engine housing (18) such that both a rotor blade (31) and the hub (30 - with or without the at least one rotor blade (31) - may be hung to the load receiving element (62).

5. Wind energy plant of one of claims 1 to 4, wherein a winch (60) is provided for lifting and lowering the load receiving element (62), said winch being attachable at the foot of the tower (14), and wherein the load receiving element (62) extends from the winch (60) in or on the tower (14) into the engine housing (18).

## Revendications

1. Éolienne, comprenant :
-- une tour (14),
-- un carter de machine monté sur la tour (14) avec faculté de rotation autour d'un axe vertical (20) et destiné à recevoir au moins un arbre (28) avec au moins un palier d'arbre (27), une transmission (32), et un générateur (36) qui sont reliés les uns aux autres par voie mécanique, ledit carter de machine (18) présentant une partie de carter (24) en dépassement radial depuis la tour (14),
-- un rotor (29) avec un moyeu (30) relié à l'arbre (28) et au moins une pale de rotor (31) dépassant depuis ledit moyeu, et
-- une grue de bord (52, 52') agencée dans le carter de machine (18) et comprenant un châssis (53) et un organe d'encaissement de charge (62), ladite grue de bord (52, 52') étant réalisée sous la forme d'une grue à portique basculante avec des bras (54) capables de basculer autour d'un axe horizontal,
**caractérisée en ce que** :
-- le châssis (53) de la grue de bord (52, 52') est capable de basculer sur le carter de machine (18) en vue de la suspension tant du générateur (36) que de la transmission (32) sur l'organe d'encaissement de charge (62),
-- une ouverture (50) est réalisée dans la paroi de fond (48) de la partie (24) du carter de machine en dépassement radial depuis la tour (14), et
-- l'ouverture (50) dans la paroi de fond (48) a une taille ainsi choisie qu'on peut y faire passer tant le générateur (36) que la transmission (32) au moyen de la grue de bord (52, 52').

2. Éolienne selon la revendication 1, **caractérisée en ce que** la partie supérieure du carter de machine (18) est réalisée au moins localement de façon amovible et/ou capable de pivoter vers le haut ou vers le bas.

3. Éolienne selon l'une ou l'autre des revendications 1 et 2, **caractérisée en ce que** le châssis (53) de la grue de bord (52, 52') est agencé mobile dans le carter de machine (18) de telle façon que ledit au moins un palier d'arbre (27) de même que l'arbre (28) peuvent être suspendus et déplacés sur l'organe d'encaissement de charge (62).

4. Éolienne selon l'une des revendications 1 à 3, **caractérisée en ce que** le châssis (53) de la grue de bord (52, 52') est agencé mobile dans le carter de machine (18) de telle façon qu'une pale de rotor (31) de même que le moyeu (30), avec ou sans ladite au moins une pale de rotor (31), peut être suspendu sur l'organe d'encaissement de charge (62).

5. Éolienne selon l'une des revendications 1 à 4, **caractérisée en ce qu'**il est prévu un treuil (60) pour la montée et pour la descente de l'organe d'encaissement de charge (62), ledit treuil pouvant être monté au pied de la tour (14), et **en ce que** l'organe d'encaissement de charge (62) s'étend depuis le treuil (60) dans la tour (14) ou le long de celle-ci jusque dans le carter de machine (18).
